# EUROPEAN PATENT APPLICATION

(11) **EP 2 341 703 A1**
(43) Date of publication of application: **06.07.2011**
(21) Application number: 09291006.6
(22) Date of filing: 31.12.2009
(51) Int. Cl.: H04M 3/493, H04M 11/08

(54) **Method and system for interactive communication**

(71) Applicant: Mahfoda, Arié, 75116 Paris (FR)
(72) Inventor: Mahfoda, Arié, 75116 Paris (FR)
(74) Representative: Callon de Lamarck, Jean-Robert

(57) **Abstract**

The invention concerns a method for interactive communication between an end-user unit (2 comprising 21,22) and a remote unit (3), comprising steps for:
- connecting a telephony terminal (21) of the end-user unit to a remote unit (3) for establishing a telephony communication over a telephony channel;
- connecting a display terminal (22) of the end-user unit to a remote unit (3) for establishing a data exchange communication over a data exchange channel once said telephony terminal (21) is connected to said remote unit (3);
- sending over said data exchange channel a display request from said remote unit (3) to said display terminal (22) for displaying on the display terminal a visual information or a video sequence;
said telephony terminal (21) and said display terminal (22) being distinct.

## Description

### Field of the invention

The invention relates to interactive communication between an end-user unit and a remote unit. More in particular, the invention relates to a method for interactive communication between an end-user unit and a remote unit and a corresponding system.

### Background of the invention

Services through telecommunication is well known today, wherein a customer can order a service through telephone, for example buying grocery goods, teleshopping, booking taxi, booking hotel room, etc.

However, with such a telecommunication only system, it is not convenient to enumerate numerous options or information that the customer may need, since the customer may not be able to memorise all the information and, therefore, will ask the service assistant to repeat his saying.

Services through network is also well known today, wherein a customer can order a service through the network (for instance Internet) for buying grocery goods, shopping, booking taxi, booking hotel room, flight tickets, etc.

However, with such a network communication only system, the customer may be puzzled with the amount of available information and may feel the need to address directly to a service assistant, whereas it is impossible.

Therefore, interactivity is unsatisfactory through both telecommunication system and network communication system.

### Invention presentation

The invention aims to overcome one or more drawbacks of the prior art by providing a method for interactive communication according to claim 1.

Other optional features of the method are found in dependent claims 2 to 10.

The invention also provides a system for interactive communication according to claim 11.

Other optional features of the system are found in dependent claims 12 to 15.

One advantage of the invention is that interactivity is enhanced. The user on the end-user unit side does not need to memorise all information provided by the remote unit side, since information related to his needs can be displayed on the display terminal of the end-user unit, while the customer interacts directly with the remote unit side through his telephony terminal.

Another advantage is that the user can give his own choice or ask for further information by simply interacting with the remote unit side over either the telephony channel - which has the advantage of rapidness of voice conversation - or the data exchange channel - which has the advantage of clearness of written communication, visually illustrated information and/or information in video format.

Another advantage is that information given to users as answers to their requests can be previously stored either in the remote unit or the service platform. Information is then reachable via codes dialled on a keypad, or a keyboard of the remote unit side and which identify needed information.

### Drawing presentation

Other features, aims and advantage of the invention will become apparent through reading of the detailed description below with reference to the illustrative and non limiting drawings, wherein:
- figure 1 is a schematic representation of an example of the method according to the invention;
- figure 2 is a schematic representation of another example of the method according to the invention;
- figure 3 is a schematic representation of still another example of the method according to the invention;
- figure 4 is a schematic illustration of an example of the system according to the invention implementing the method of figure 1;
- figure 5 is schematic illustration of another example of the system according to the invention implementing the method of figure 2;
- figure 6 is schematic illustration of still another example of the system according to the invention implementing the method of figure 3 ; and
- figure 7 is schematic illustration of still another example of the system according to the invention implementing the method of figure 3.

### Detailed description of the invention

### System for interactive communication

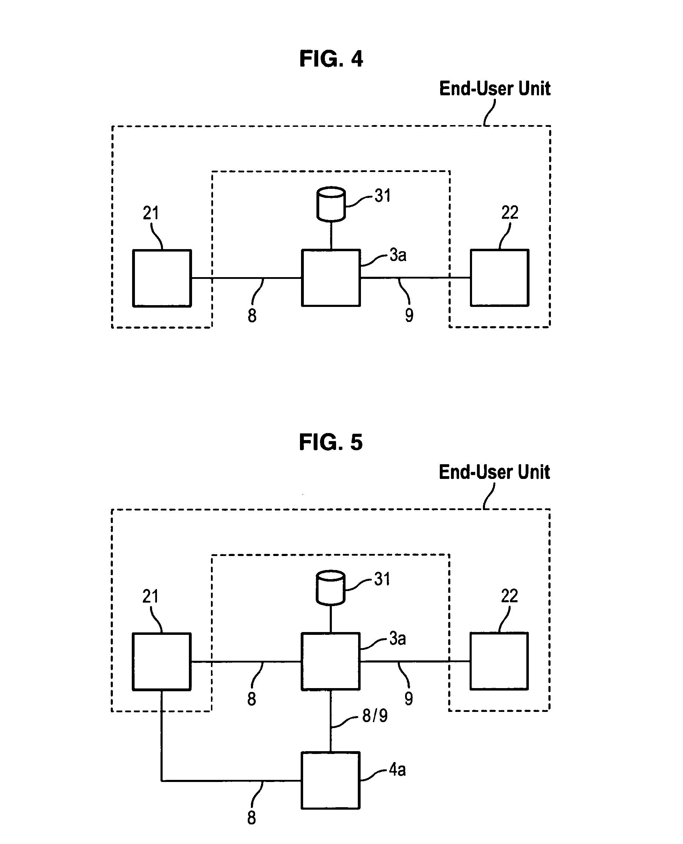

With reference to figures 4-6, a system **1** for interactive communication between an end-user unit **2** and a remote unit **3** is described here after.

The system comprises a remote unit **3;** and an end-user unit **2.**

The end-user unit **2** comprises a telephony terminal **21,** which is connectable to the remote unit **3** over a telephony channel **8.**

The end-user unit **2** further comprises a display terminal **22.** The display terminal **22** is also connectable to the remote unit **3** over a data exchange channel **9.**

The telephony communication and the data exchange communication are conjunctly available for a period of time.

The display terminal **22** can be connectable to the remote unit **3** once the telephony terminal **21** is connected to the remote unit **3,** or *vice-versa.*

The telephony terminal **21** and the display terminal **22** are distinct one from the other. The telephony channel **8** and the data exchange channel **9** are also distinct.

The telephony terminal **21** enables connection with the remote unit **3** establishing a telephony communication over the telephony channel **8.** Whereas the display terminal **22** enables connection with the remote unit **3** for establishing a visual or video connection over the data exchange channel **9.** This data exchange channel **9** enables sending a display request **6** from the remote unit **3** to the display terminal **22.** The display request triggers display of a visual information or a video sequence on the display terminal **22.**

Referring more in particular to figures 4-6, the remote unit **3** can comprise a storage unit **31** for storing a visual or video digital content **6a.** This visual or video digital content **6a** corresponds to the visual information or the video sequence to be displayed on the display terminal **22.**

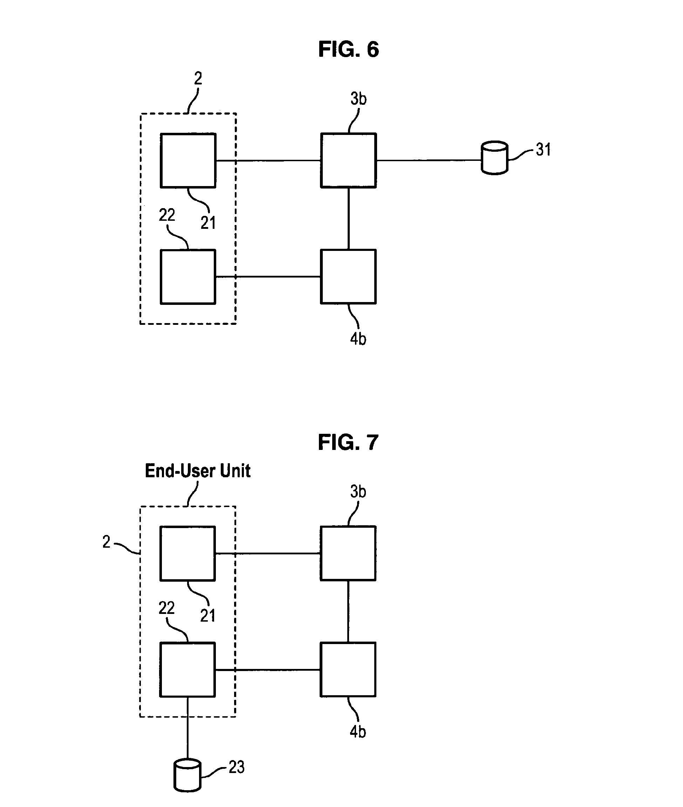

The system **1** can also comprise a service platform **4** through which the display terminal **22** and the remote unit **3** are connected as illustrated by figure 6 and 7. Thus, the service platform **4** acts as an intermediate unit between the remote unit **3** and the telephony terminal **21** as illustrated in figure 5.

The system **1** can comprise a service provider terminal **5,** which is connectable to the remote unit **3** and to the telephony terminal **21.**

The system **1** can comprise a storage unit **23** not connected to the remote unit **3.** The storage unit **23** can be portable such as USB dongle, CD-Rom, CRW, DVD, DVDR, portable hard drive or any device for local digital data storage, for example connectable to the display terminal **22** through USB port or HDMI port of the display terminal **22.** The storage unit **23** can also be any device for digital data storage connected to the display terminal via any network, for example Ethernet or public Internet or virtual private network; such as networked storage. A visual or video digital content **6a,** corresponding to the visual information or video sequence to be displayed on the display terminal **22,** is stored in the storage unit **23.** The storage unit **23** is connected to the display terminal **22.** Upon reception of the display request **6,** the display terminal **22** interacts with the storage unit **23** to retrieve the visual or video digital content **6a** for displaying the corresponding visual information of video sequence.

In all cases, the telephony channel **8** can be a conventional (fixed or mobile) telecommunication network channel or a public Internet, or a virtual private network channel or any access network channel. The telephony channel **8** can also be a mixed telecommunication/public Internet channel or mixed telecommunication/virtual private network channel or any access network. The telecommunication network channel can be circuit-switched or packet-switched based. The access network channel can be voice and video telephony call over packet-switched or circuit switched based network channel.

The data exchange channel **9** is a public Internet or virtual private network channel through which digital data can be sent and received. The protocol used depends on the display terminal **22** configuration. More than one protocol can be necessary, in which case, a gateway is provided between the remote unit **3** and the display terminal **22** such as a SIP/Flash gateway if the remote unit **3** output uses SIP protocol and the display terminal input uses Flash protocol.

The telephony terminal **21** comprises a human-to-machine interface (HMI), which enables a user to interact with the telephony terminal **21.** The telephony terminal **21** can be chosen amongst: a (mobile) telephone, a microphone linked to a voice and video telephony call over packet-switched or circuit switched network apparatus (with or without camera), or any device adapted for connection over a telephony channel **8.**

The display terminal **22** adapted for displaying the visual or video digital content. For example, the display terminal **22** comprises a dedicated application such as AdobeFlash player or a SIP-based client if the extension of the visual or video digital content should be read by such a play or client.

The display terminal **22** is any device with a screen and adapted to be connected to the virtual network such as: a TV set; a computer; a mobile telephone; a personal digital assistant (PDA); a digital hoarding; or any screen; etc.

The display terminal **22** can also comprise a HMI for direct interaction between the user and the display terminal **22.**

HMI of the telephony terminal **21** or the display terminal **22** can be chosen amongst: keyboard; keypad; gamepad; joystick; remote control; mouse; graphic tablet; touch screen; microphone; fingerprint reader; etc.

### The method for interactive communication

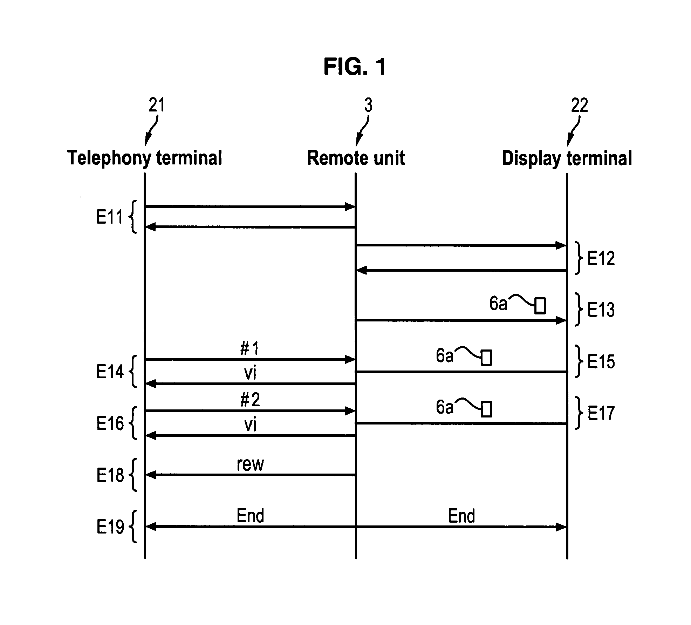

With reference to figures 1-3, a method for interactive communication between an end-user unit **2** and a remote unit **3** is hereafter described.

The method comprises a step **E11, E21, E41** for connecting a telephony terminal **21** of the end-user unit **2** to a remote unit **3** for establishing a telephony communication over a telephony channel **8.** Thus, a telephony communication can take place. This telephony communication can be a voice (and eventually also video) communication between two people.

The method also comprises a step **E12, E22, E44** for connecting a display terminal **22** of the end-user unit **2** to a remote unit **3** for establishing a data exchange communication over a data exchange channel **9.** Therefore, apart from being able to orally communicate, it is also possible to send digital content from the remote unit **3** to the end-user unit, such as a visual or video digital content **6a** or any digital data content related to the end user request(s). Optionally, it is also possible for the display terminal **22** to send a digital content to the remote unit **3.** Furthermore, data exchange is done in real time.

These two communications over a telephony channel **8** and a data exchange channel **9** enhance interactivity. Oral and visual information (which can also be a video sequence) can thus be exchanged.

It should be mentioned that, in any case, the telephony terminal **21** and the display terminal **22** are distinct device or apparatus.

The method further comprises a step **E13, E15, E17 : E23, E25. E27, E29 ; E45, E46** for sending over the data exchange channel **9** a display request **6** from the remote unit **3** to the display terminal **22** for displaying on the display terminal **22** visual information or a video sequence. The display request **6** can either be a visual or video digital content **6a** or a display request message **6b.**

The telephony terminal **21** is connected to the remote unit **3** through a conventional telecommunication network, a public Internet or virtual private network.

The display terminal **22** is connected to the remote unit **3** through a public Internet or virtual private network or any access network.

It is also possible to connect more than one telephony terminal **21** to the remote unit **3** for enhanced interactivity.

For example, the users all interact with the same display terminal **22.** In case the telephony terminal **21** comprises a display screen, it is also possible for the remote unit **3** to send a visual or video digital content to the telephony terminal **21,** which is different from the visual or video digital content **6a** sent to the display terminal **22.** In this case, if there are more than one telephony terminals (n) **21** connected to the remote unit **3.** The remote unit **3** controls more than two displays (n+1), that is to say display on the display terminal **22** and on the screens of the telephony terminals **21.**

### a. Visual or video digital content as display request

In the following, more detail of the method will be given should the display request **6** be a visual or video digital content **6a.**

In this case, the visual or video digital content **6a** corresponds to the visual information or the video sequence to be displayed on the display terminal **22.** That is to say that upon sending only the visual or video digital content **6a,** the display terminal **22** of the end-user unit **2** will display the corresponding visual information or the video sequence. This is necessary when the visual or video digital content 6a is not locally - *i.e.* on the end-user unit side - available.

### ■ The remote unit can be a service provider

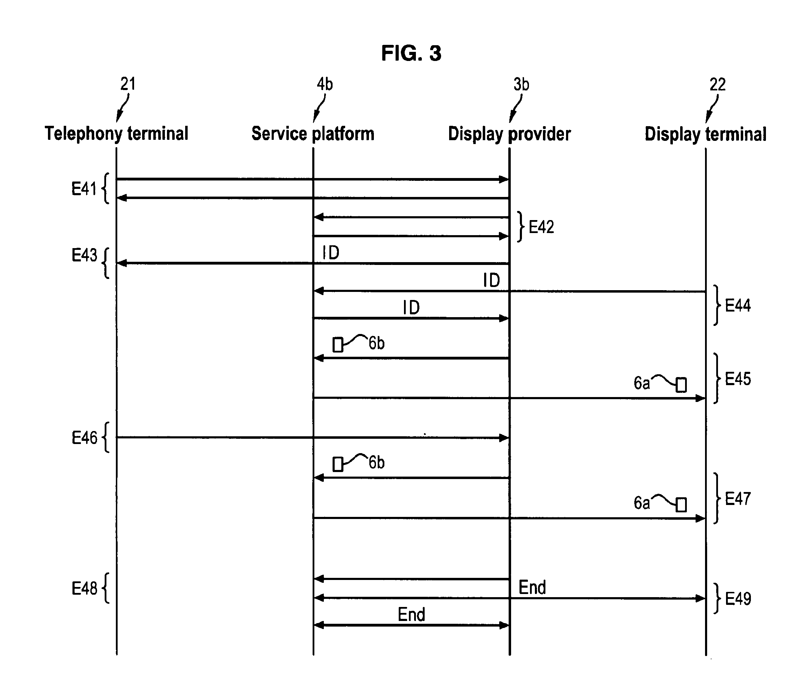

The step **E44** of connecting the remote unit **3** to the display terminal **22** can comprise a sub-step for connecting the remote unit **3** to a service platform **4b;** and connecting the display terminal **22** to the service platform **4b** (see figure 3). The remote unit side becomes thus a service provider **3b** with a service provider terminal **3b.** The user calls the service provider directly and through the telephony channel **8.**

The service provider terminal **3b** sends to the service platform **4b** a display request message . Upon reception of the display request message the service platform **4b** sends the visual or video digital content **6a** corresponding to the visual information or the video sequence to the display terminal **22.** Reception of the visual or video digital content **6a** triggers display of the visual information of the video sequence on the display terminal **22** (see step **E45, E46).**

This is necessary when the method cannot be provided by the service provider because it does not have the necessary technology to do so and is not interested in having the technology locally on the service provider side. Thus the service provider subscribes to a special intermediate service for interactive communication. With this intermediate service, the service provider terminal **3b** can be connected to the service platform **4b.**

In this particular configuration, it is possible for several service provider terminals **3b** to be connected to the same service platform **4b.** These service providers' aims can be identical or different, *i.e.* providing identical or different services.

Visual or video digital content **6a** to be sent are selected either by sending a display message to the service platform **4b** comprising an identification reference of the visual or video digital content **6a** (in this case the visual or video digital content **6a** is stored on the service platform side and sent by the service platform **4b),** or by sending directly the visual or video digital content **6a,** or the service provider terminal **3b** comprises a screen on which an information window is displayed and all visual or video digital content **6a** put into the information window is displayed on the display terminal **22,** the information window acting, thus, as a web camera (in these latter cases the visual or video digital content is stored on the service provider side).

### ■ Identification code is needed

In the case there is a service platform **4b** between the service provider terminal **3b** and the display terminal **22,** entering **E43, E44** an identification code **ID** on the end-user unit side can be set as a prerequisite for connecting the display terminal **22** of the end-user unit **2** to the service platform **4b.** In this aim, prior to connecting the display terminal **22** to the service platform **4b,** the method can comprise a step **E43** for sending an identification code **ID** from the service provider terminal **3b** to the telephony terminal **21,** and a step **E44** for entering the identification code **ID** in the display terminal **22.**

The step **E43** of sending an identification code from the service provider terminal **3** to the telephony terminal **21** is optional and can be avoided, especially when the end user has a personal identification code, which enables him to connect the display terminal **22** to the service platform **4.**

For entering the identification code **ID** into the display terminal **22,** this latter comprises a HMI as described in the previous section on the structure of the system **1.** Also the identification code **ID** can be memorised in the display terminal **22,** thus avoiding need to enter the identification code **ID** in subsequent use of the service.

The identification code **ID** enables connecting the display terminal **22** to the service platform **4b** to be successful.

The identification code **ID** can be a calling line identifier (CLI) of the display terminal **22.**

### ■ The remote unit is the service platform

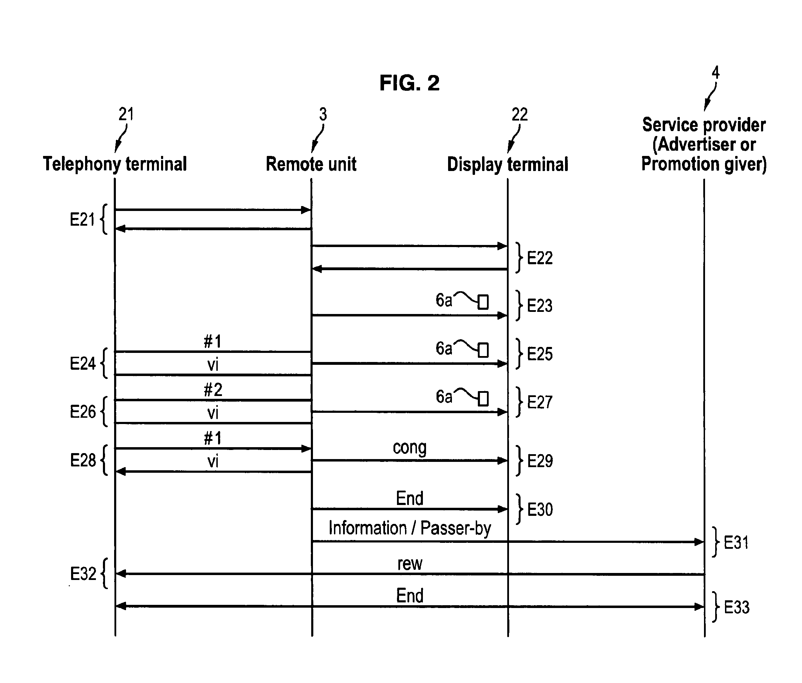

The remote unit **3** can be itself the service platform **3a** when technology for implementing the method is available locally on the remote unit side (see figures **1** and **2****).**

The service platform **3** controls display of the display terminal **22** contingently on information received through the telephony channel **8.** Thus, a virtually direct connection is established between the telephony terminal **21** and the display terminal **22.** This enables virtual control of the display terminal **22** by the telephony terminal **21.**

In this configuration, a service provider terminal **4a** can be connected to the service platform **3a** (see figure 2), but the user on the end-user side cannot call the service provider directly through the telephony channel **8.** However, it enables establishment of a virtual telephony communication between the telephony terminal **21** and the service provider terminal **4a.**

The service provider can be made able to interact directly with the end-user unit **2** upon reception of a communication request **6d** from the service platform **3a.** The communication request **64** comprises all necessary information for the service provider terminal **4a** to reach the end-user unit **2** and especially the telephony terminal **21** of the end-user unit **2.** The service provider terminal **4a** sends then a digital content to the telephony terminal **21.**

In all cases under this section a, the service platform or the service provider terminal can comprise a storage unit for storing the visual or video digital content.

### b. Display request message as display request

The display request **6** can comprise sending a display request message **6b** to the display terminal **22** triggering display of the visual information or the video sequence on the display terminal **22.**

A visual or video digital content **6a** corresponding to the visual information or the video sequence to be displayed on the display terminal **22** can be stored in a storage unit **23** connected to the display terminal **22.** Upon reception of the display request message **6b** by the display terminal **22,** the visual or video digital content **6a** is at least partially transmitted from the storage unit **23** to the display terminal **22** for display. The visual information or video sequence can be displayed before the corresponding visual or video digital content **6a** is entirely transmitted from the storage unit **23** to the display terminal **22.**

Thus, the visual or video digital content **6a** can be previously sent to the end user by another means than over the data exchange channel **9.** For example, the storage unit **23** comprising the visual or video digital content **6a** can be given to the end user during an advertising or promotional event in a shop, on the street, on university campus, on workplace, etc. The storage unit **23** can also be sent by post to the end user.

Apart from the display request **6** being a display request message **6b** and from the storage unit **23** not being comprised in the remote unit **3,** other features are the same as those described in section A.

### Examples of application

### a. Mobile telephone and digital hoarding: advertising or promotional event (figures 1, 2, 4 and 5)

In this first example (figures 1 and 4), a customer passes by a digital hoarding **22** on which an advertisement or a promotion is displayed. The displayed advertisement or promotion suggests the passer-by to contact a service platform **3a** using his mobile telephone **21** by dialing a dedicated number.

The service platform **3a** provides an intermediate service provided by the method described above. There are several possibilities: either the service platform side has service assistants for reception of end user call, or the intermediate service is automated using an interactive voice and video response system. In the latter case, the service platform **3a** will orally interact with the passer-by by sending through the telephony channel **8,** voice information that is chosen contingently on the passer-by's selection.

In case there are service assistants, these service assistants will interact with the service platform **3a** through an HMI, eventually equipped with a screen.

In any case, the passer-by has a telephone as a telephony terminal **21.** The digital hoarding is used as a display terminal **22** of the end-user unit **2.**

When the passer-by dials on his mobile telephone **21** the dedicated number, his mobile telephone **21** is connected **E11** with the service platform **3a** over the telephony channel **8.** The passer-by and the service platform **3a** exchanges voice information through the telephony channel **8.**

The digital hoarding **22** with which the passer-by wishes to interact (generally the closest) is located either by geolocation or by entering by the passer-by an identification number of the digital hoarding on the keypad of his telephony terminal **22.**

In case location is performed by geolocation, the service platform **3a** detects the digital hoarding **22** nearest the passer-by. In order to connect the correct digital hoarding **22** to the service platform **3a,** geolocation is performed to find out where the mobile telephone **21** of the passer-by is located and to select the digital hoarding **22** nearest the passer-by. Once the digital hoarding **22** nearest the passer-by is located, it is remotely connected to the service platform **3a** to establish **E12** visual or video communication over a data exchange channel **9.**

Both telephony channel **8** and data exchange channel **9** ensure a two-channel communication with different information being transmittable through both channels and to two different terminals on the passer-by side (mobile telephone **21** and digital hoarding **22).**

Upon connection of the digital hoarding **22** to the service platform **3a,** the service platform **3a** sends **E13** a visual or video digital content **6a** to the digital hoarding. The digital hoarding **22** displays the corresponding visual information or video sequence.

On the displayed visual information or video sequence, several choices are given to the passer-by. The passer-by can detail his choice over the telephony channel **8** either by speaking out loud his choice or by dialing on the keypad of the mobile telephone **21** a number or series of number corresponding to his choice.

Meanwhile, the service platform **3a** can also send **E14** to the mobile telephone **21** of the passer-by voice information **vi** over the telephony channel **8.** The voice information **vi** can explain the choices displayed on the digital hoarding **22.**

Once the choice of the passer-by is received by the service platform **3a,** the service platform **3a** sends **E15** second visual or video digital content **6a** to the digital hoarding **22** through the data exchange channel **9.** The digital hoarding **22** displays, then, corresponding second visual information or video sequence. The service platform **3a** can again send **E16** voice information **vi** over the telephony channel **8** to the mobile telephone **21** of the passer-by.

Then, if possible, the passer-by can detail his choice again by the same means as before.

The method can go on with more visual information or video sequences being displayed with telephony communication between the passer-by and the service platform side.

Once the advertisement or promotional support reaches its end, the service platform can send a reward **rew** to the passer-by on his mobile telephone **21** as thanks reward for his participation to the advertising or promotional event. For example, the service platform **3a** locates a close-by retail shop that accepted to be part of the advertising or promotional event and sends **E18** a digital coupon **rew** in SMS, MMS or QRCode format giving the passer-by a 10% discount for buying determined goods at the retail shop.

The service platform **3a** finally disconnects **E19** the mobile telephone **21** and the digital hoarding **22.**

Alternatively (figure 2 and 5), once the advertisement or promotional support reaches its end, the service platform **3a** sends visual congratulation information **cong** over the data exchange channel **9** to the digital hoarding **22** for display and/or voice congratulation information over the telephony channel **8** to the mobile telephone **21** of the passer-by.

The passer-by is thereby informed that he will receive a coupon giving him a 10% discount for buying determined goods at a determined retail shop.

The service platform **3a** disconnects **E30** the digital hoarding **22** and the mobile telephone **21.** The service platform **3a** also sends **E31** to a service provider terminal **4a** that launched the advertising or promotional event information **info** on the passer-by, especially mobile telephone number and location. The service provider terminal **4a** can then sends **E32** to the mobile telephone **21** of the passer-by the coupon **rew** in SMS, MMS or QRCode format giving him 10% discount for buying determined goods at a close by determined retail shop.

This method is flexible. For example, the advertising or promotional event can be a quiz (figure 2). The service platform sends **E23, E25, E27** visual or video digital content **6a** to the digital hoarding **22** for display of corresponding visual information or video sequence and the passer-by gives **E24, E26, E28** his answer by dialing on the key pad of his mobile telephone **21.** If the passer-by reaches a predetermined score, he is rewarded a coupon.

More than one passer-by can take part in the quiz, creating thus a championship. Scores are displayed on the digital hoarding **22.**

### b. Telephone and TV set: visual or video digital content stored by the service provider (fiqure3 and 6)

In this example, a customer would like to buy a flight ticket through an airline company. The airline company has a call centre (remote unit side) with service assistants for dealing with flight ticket booking and call center terminals **3b,** which can comprise a computer and optionally an interactive voice or video response system in case all service assistants are already occupied. (In case no service assistant is available, the interactive voice or video response system can give information to the end user through the telephony channel, for example giving information on the identification code if any).

These service assistants are trained so that they can use the service provided by the method described above.

The call centre of the airline company does not implement itself the service and must then connects **E42** the call center terminals **3b** to a service platform **4b.** The service assistant will interact through a computer with the service platform **4b.**

The computer **3b** of the service assistant is connected to the service platform **4b.**

The customer has a telephone **21** and a TV set **22** (screen, remote control).

For booking his flight ticket, the customer will call **E41** the service assistant with his telephone **21** and the service assistant will receive the call through his telephone **3b,** thus establishing a telephony communication over a telephony channel **8.**

The TV set **22** will then be connected to the service platform **4b.** This connection is performed according to one of the following possibilities:
- the customer has a frequent flyer number and enters his frequent flyer number as an identification code **ID** for connection to the service platform **4b** on the remote of his TV set **22;** or
- the customer does not have a frequent flyer number and will wait for the service assistant or for the interactive voice or video response system to give him an identification code **ID** over the telephony channel **8.**

The TV set of the customer connects **E44** to the service platform **4b** with the identification code **ID.** A visual or video communication is thus established over a data exchange channel **9.**

The service assistant connects his computer to the service platform **4b** by entering the same identification code **ID** as the customer.

Both telephony channel **8** and data exchange channel **9** ensure a two-channel communication with different information being transmittable through both channels.

Once the display terminal **22** is connected to the service platform **4b,** the computer of the service provider sends **E45** a visual or video digital content **6a** to the display terminal **22,** which displays corresponding visual information or video sequence. Visual information of video sequence can be a welcome greeting.

The customer tells **E46** the service assistant that he would like a flight ticket to New York City through the telephony channel **8.** Upon receiving this information, the service assistant can select and send **E47** to the customer another visual or video digital content **6a.** This visual or video digital content **6a** is sent from the computer **3b** of the service assistant, via the service platform **4b,** and up to the TV set **22** of the customer.

The visual or video digital content **6a** is then displayed on the TV set **22** of the customer and visible on the screen. On the screen, information on available flights is displayed with choices. Each choice can correspond to an option (date, time, itinerary and class of the flight).

For example, there are five available flights on December 9 at 6:30, 9:50, 12:00, 16:25, and 20:35.

Therefore, the customer does not need to remember all the information on available flights, which some time can be overwhelming.

The customer selects the 20:35 flight. To do so, he tells the service assistant his choice corresponding to the 20:35 flight through the telephony channel **8.** Thus it is not necessary for the service assistant to enumerate all the choices and the customer does not need to wait for the end of the enumeration before giving his choice. Information is thus personalized and time is saved.

Then it is possible for the customer to choose his seat. The service assistant will send a visual or video digital content **6a** corresponding to the seat choice through the service platform **4b** up to the TV set **22** that displays corresponding visual information or video sequence showing the free seats in green and the already booked seats in red. It is thus easier for the customer to choose his seat.

When the flight ticket is booked and no more information is need, the call center terminal sends **E48** an end message to the service platform **4b** for disconnection. The service platform **4b** disconnects the TV set **22** and the computer of the call center.

Thus, fewer mistakes are to be encountered.

Then, the service assistant sends to the service platform **4b** a confirmation message and more information on the booked flight. The service assistant can also send applications such as weather application giving the weather at destination place, monitoring application giving information of any change in the flight planning. These applications are then sent to the TV set **22** during later connection of the TV set **22** to the service platform **4b.**

### c. Telephone and TV set: visual or video digital content stored by the service provider (figure 6)

In this example, a potential customer (hereafter customer) would like to receive more information on a cruise offered by a travel agency. The travel agency is generally too small to have a call centre with service assistants for dealing with customers and their questions. So the travel agency will deal with customers and their questions themselves. To do so, the travel agency has a telephone **3b** with an assigned telephone number, which the customer calls. The service is simplified for the travel agency since they usually cannot afford training to the service provided by the method described above with all its possibilities. The telephone **3b** of the travel agency is connected to the service platform **4b** after entering an identification code **ID**.

The customer has either subscribed to the service and was given an identification code **ID** by the service platform **4b** (Example 1.1) or has not subscribed to the service (Example 1.2).

In any case, the customer has a telephone **21** and a TV set **22** (screen, remote control).

For asking for information on the cruise, the customer will call **E41** the travel agency with his telephone **21** and the travel agency will receive the call through its telephone **3b,** thus establishing a telephony communication over a telephony channel **8.**

In Example 2.1, either the customer was sent an identification code **ID** to be dialed on the remote control of his TV set **22** after being invited by the travel agency informing him that the service is available, or the TV set **22** of the customer is registered by the service platform **4b** with a CLI of the TV set **22,** which is connected to the service platform **4b** automatically when the service is available.

In Example 2.2 the travel agency will suggest the customer to use the dedicated service and will give the customer an identification code **ID** through the telephony channel **8.** The identification code **ID** is then to be entered on the remote control of his TV set **22.**

The TV set **22** of the customer connects to the service platform **4b** by sending the identification code to the service platform **4b.** A visual or video communication is thus established over a data exchange channel **9.**

Both telephony channel **8** and data exchange channel **9** ensure a two-channel communication with different information being transmittable through both channels.

The customer tells the travel agency that he would like to have more information on a cruise around the Mediterranean Sea through the telephony channel **8.**

For example, the customer would like to know the itinerary of the cruise through the telephony channel **8.** The travel agency will then dial on the keypad of his telephone **3b** a code corresponding to the needed information. The code is for example #3.

When the travel agency dials on the keypad of the telephone **3b** #3, an information request corresponding to the needed information is sent to the service platform **4b.** Then the service platform **4b** sends to the TV set **22** of the customer the corresponding visual or video digital content **6a** and corresponding visual information or video sequence is displayed on the screen of the TV set **22.**

Then, if the customer needs information on the cruise boat used during the cruise, the travel agency will dial another code, for example #7. An information request corresponding to the information on the cruise boat is sent to the service platform **4b** that sends to the customer the corresponding visual or video digital content **6a.** The information on the cruise boat is then displayed on the screen of the TV set **22** of the customer.

The different visual or video digital contents **6a** on the cruise are stored in a storage unit **41** of the service platform **4b.** The different pieces of information can be created via an edition unit **42** of the service platform and can be modified or deleted at any time through the edition unit **42.**

When more information is need, the travel agency of the customer hangs up his telephone **3b,** which triggers sending an end message to the service platform **4b** for disconnection. The service platform **4b** disconnects the TV set **22** and eventually the telephone **3b** of the travel agency.

The travel agency can then send more information and/or information asked during the telephony and data exchange communication on the cruise to the service platform **4b.** Information is then transmitted to the TV set **22** during later connection.

This method is very user-friendly and time-saving for the travel agency. This method is very useful for the customer that can have more thorough information than just voice information while being able to orally interact with the travel agency.

### d. Telephone and TV set: visual or video digital content stored in a storage unit to be connected to the TV set (figure 7)

This example can be used as an alternative for examples in section b. and c.

The difference is that the customer previously receives a storage unit **23** such as a USB dongle. The USB dongle **23** comprises advertisement or promotion for flight ticket or travel cruise over the Mediterranean Sea. The USB dongle comprises all the necessary visual or video digital contents **6a.**

The USB dongle also comprises a dedicated application to be installed by the customer on his TV set **22** prior to be able to use the service. The dedicated application can be also made available upon downloading from an access network.

The USB dongle **23** is to be connected to the TV set **22,** which is provided with a USB port. The USB dongle **23** remains connected to the TV set **22** during the connection session.

All steps are identical to those of example in section b. or example in section c. except that no visual or video digital contents **6a** are sent; a display request message **6b** is sent instead to the TV set **22.**

Upon reception of the display request message **6b** by the TV set **22,** the dedicated application will retrieve the corresponding visual or video digital content **6a** from the USB dongle **23** and corresponding visual information or video sequence is displayed on the screen of the TV set **22.**

Optionally the service platform **4b** can instruct the dedicated application on the TV set **22** to retrieve corresponding visual or video digital content on a distant server connected to a WAN.

All features of above four examples can be adapted to be used in any of the other example. Also, the examples are not limitative and any features described previously in sections relating to the system or the method can be adapted to these examples.

### Media support

The method for interactive communications described here above can be implemented by a computer program. The computer program can be stored in a media support readable by the system for interactive communications described here above.

The media support can be a CD-ROM, a DVD, a server, a memory stick, an SD-card and alike or any support that enables storage of a computer program.

## Claims

1. A method for interactive communication between an end-user unit (2) and a remote unit (3), comprising steps for:
- connecting a telephony terminal (21) of the end-user unit (2) to a remote unit (3) for establishing a telephony communication over a telephony channel (8);
- connecting a display terminal (22) of the end-user unit (2) to a remote unit (3) for establishing a data exchange communication in real time over a data exchange channel (9);
- sending over said data exchange channel (9) a display request (6) from said remote unit (3) to said display terminal (22) for displaying on the display terminal (22) a visual information or a video sequence;
said telephony communication and said data exchange communication being conjunctly available for a period of time;
said telephony terminal (21) and said display terminal (22) being distinct.

2. The method of claim 1, wherein sending said display request (6) comprises sending a visual or video digital content (6a) corresponding to said visual information or said video sequence to be displayed on said display terminal (22).

3. The method of claim 2, wherein connecting said remote unit (3) to said display terminal (22) comprises:
- connecting said remote unit (3) to a service platform (4b); and
- connecting said display terminal (22) to a service platform (4b); wherein said remote unit (3) sends to said service platform (4b) a display request message (); and wherein upon reception of said display request message () said service platform (4b) sends said visual or video digital content (6a) to said display terminal (22) triggering display of said visual information of said video sequence on said display terminal (22).

4. The method of claim 3, further comprising, prior to connecting said display terminal (22) to said service platform (4b):
- sending an identification code from said remote unit (3) to said telephony terminal (21);
- entering said identification code (ID) in said display terminal (22);
said identification code (ID) allowing connecting said display terminal (22) to said service platform (4b) to be successful.

5. The method of claim 2, wherein said remote unit (3) is a service platform (3a), which controls display of said display terminal (22) contingently on information received through the telephony channel (8), establishing virtually a direct connection between said telephony terminal (21) and said display terminal (22) and enabling virtual control of said display terminal (22) through said telephony terminal (21).

6. The method of claim 5, further comprising:
- connecting a service provider terminal (4a) to said service platform (3a) for establishing a virtual telephony communication between the telephony terminal (21) and the service provider terminal (4a).

7. The method of claim 1, wherein sending display request (6) comprises sending a display request (6) message to said display terminal (22) triggering display of said visual information or said video sequence on said display terminal (22).

8. The method of claim 7, wherein a visual or video digital content (6a) corresponding to said visual information or said video sequence to be displayed on said display terminal (22) is stored in a storage unit (23) connected to said display terminal (22); upon reception of said display request (6) message by said display terminal (22), said visual or video digital content (6a) is at least partially transmitted to said display terminal (22) for display.

9. The method of any claims 1-8, wherein said telephony terminal (21) is connected to said remote unit (3) through a conventional telecommunication network or public Internet or a virtual private network.

10. The method of any claims 1-9, wherein said display terminal (22) is connected to said remote unit (3) through public Internet or a virtual private network.

11. A system for interactive communication between an end-user unit (2) (2) and a remote unit (3) (4) comprising:
- a remote unit (3);
- an end-user unit (2) including a telephony terminal (21) connectable to said remote unit (3) over a telephony channel (8);
**characterized in that** said end-user unit (2) further comprises a display terminal (22), said display terminal (22) being connectable to said remote unit (3) over a data exchange channel (9) once said telephony terminal (21) is connected to said remote unit (3) for sending a display request (6) from the remote unit (3) to said display terminal (22) triggering display of a visual information or a video sequence on said display terminal (22),
said telephony terminal (21) and said display terminal (22) being distinct.

12. The system of claim 11, wherein said remote unit (3) comprises a digital storage unit for storing a visual or video digital content (6a) corresponding to said visual information or said video sequence to be displayed on said display terminal (22).

13. The system of claim 12, further comprising a service platform through which said display terminal (22) and said remote unit (3) are connected.

14. The system of claim 12, further comprising a service provider terminal connectable to said remote unit (3).

15. The system of claim 11, further comprising a storage unit for storing a visual or video digital content (6a) corresponding to said visual information or said video sequence to be displayed on said display terminal (22); said storage unit being connected to said display terminal (22),
said storage unit (23) can be a local storage unit directly connected to said display terminal (22) or a remote storage unit connected to said display terminal (22) via a network.
